## Europäisches Patentamt

## European Patent Office

## Office européen des brevets

(11) Veröffentlichungsnummer: **0 249 718**
**A2**

# EUROPÄISCHE PATENTANMELDUNG

(21) Anmeldenummer: **87105942.4**

(22) Anmeldetag: **23.04.87**

(51) Int. Cl.⁴: **F 02 B 29/04**

(30) Priorität: **20.06.86 DE 3620754**

(43) Veröffentlichungstag der Anmeldung: **23.12.87**
**Patentblatt 87/52**

(84) Benannte Vertragsstaaten: **DE FR GB IT**

(71) Anmelder: **Dr.Ing.h.c. F. Porsche Aktiengesellschaft, Porschestrasse 42, D-7000 Stuttgart 40 (DE)**

(72) Erfinder: **Bott, Helmuth, Prof. Dr., Ritterstrasse 2, D-7530 Pforzheim 8 (DE)**

(54) **Brennkraftmaschine mit Abgasturbolader und Ladeluftkühleinrichtung.**

(57) Diese Brennkraftmaschine ist mit einem eine Abgasturbine und einen Turbokompressor aufweisenden Abgasturbolader versehen. Der Turbokompressor fördert über eine Zuführungsleitung verdichtete Ladeluft in die Brennräume der Zylinder der Brennkraftmaschine.

In die Zuführungsleitung ist eine die Ladelufttemperatur senkende Kühleinrichtung geschaltet, die einen Verdampfer der Klimaanlage des Kraftfahrzeugs umfasst.

EP 0 249 718 A2

2

Brennkraftmaschine für ein Kraftfahrzeug

Die Erfindung betrifft eine Brennkraftmaschine für ein Kraftfahrzeug mit einem eine Abgasturbine und einen Turbokompressor aufweisenden Abgasturbolader, dessen Turbokompressor über eine Zuführungsleitung verdichtete Ladeluft in Brennräume von Zylindern der Brennkraftmaschine fördert, wobei in die Zuführungsleitung eine die Ladelufttemperatur senkende Kühleinrichtung geschaltet ist.

Bei einer bekannten Brennkraftmaschine (DE-OS 32 00 686) der eingangs genannten Gattung wird die Ladelufttemperatur mittels eines Ladeluft-kühlers gesenkt.

Aufgabe der Erfindung ist es, die Kühleinrichtung der Ladeluft einer Brennkraftmaschine mit vertretbaren Mitteln so zu gestalten, daß das Volumen der Ladeluft deutlich verringert wird, um die Leistung der Brennkraftmaschine zu steigern und ihre thermische Belastung zu reduzieren.

Erfindungsgemäß wird dies durch die Merkmale des Anspruchs 1 gelöst. Die Erfindung weiterbildende Merkmale sind in den Unteransprüchen enthalten.

Die mit der Erfindung hauptsächlich erzielten Vorteile sind darin zu sehen, daß sich mit dem Verdampfer der an sich vorhandenen Klimaanlage des Fahrzeugs die Temperatur der Ladeluft so weit absenken lässt, daß die Brennkraftmaschine bezüglich Leistung, thermischer Belastung und Kraftstoffverbrauch optimiert ist. Dies wird noch deutlich dadurch verbessert, wenn die Ladeluft-Kühleinrichtung durch einen Ladeluftkühler und den Verdampfer gebildet wird.

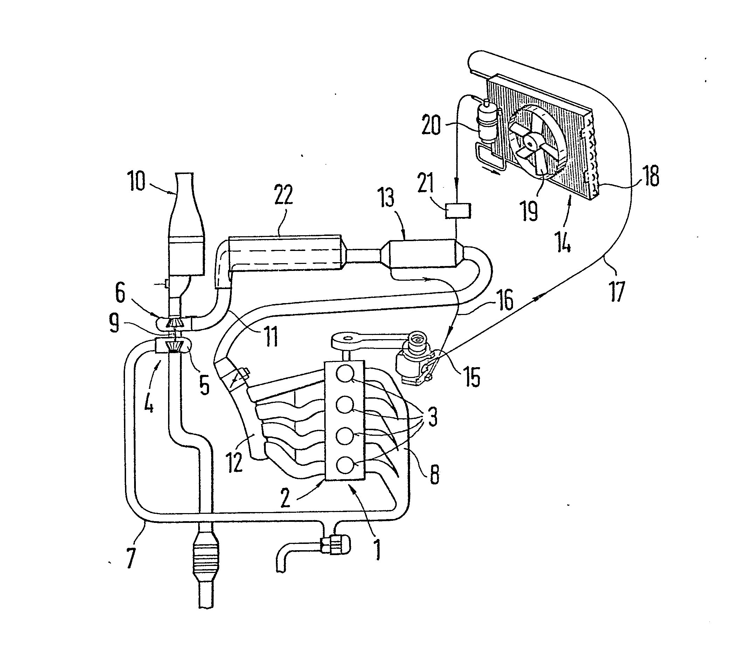

In der Zeichnung ist ein Ausführungsbeispiel der Erfindung dargestellt, das nachstehend näher beschrieben ist.

Die schematisch gezeigte Brennkraftmaschine 1 umfasst ein Gehäuse 2 mit in Reihe angeordneten Zylindern 3. Mit 4 ist ein Abgasturbolader bezeichnet, der eine Abgasturbine 5 und einen Turbokompressor 6 aufweist. Die Abgasturbine 5 ist über eine Leitung 7 mit einem Auslaßkrümmer 8 verbunden und wird von den Abgasen der Brennkraftmaschine 1 angetrieben. Der Turbokompressor 6 ist mittels einer Welle 9 an die Abgasturbine 5 angeschlossen und saugt über eine Einlaßvorrichtung 10 Frischluft an, die vom Turbokompressor 6 verdichtet und als Ladeluft über eine Zuführungsleitung 11 und einen Ansaugkrümmer 12 zu den nicht gezeigten Brennräumen der Zylinder 3 der Brennkraftmaschine 1 gelangt.

In die Zuführungsleitung 11 ist ein die Ladeluft kühlender Verdampfer 13 geschaltet, der Bestandteil einer Klimaanlage 14 des nicht näher dargestellten Fahrzeugs ist. Die Klimaanlage 14 umfasst einen von der Brennkraftmaschine 1 angetriebenen Kältekompressor 15, der unter Zwischenschaltung von Leitungen 16, 17 an den Verdampfer 13 bzw. einen Kondensator 18 angeschlossen ist. Der Kondensator 18 wird durch ein Gebläse 19 und den beim Fahren entstehenden Luftstrom beaufschlagt. Zwischen Verdampfer 13 und Kondensator 18 ist ein Kältemittelbehälter 20 und ein Expansionsventil 21 vorgesehen.

Neben dem Verdampfer 13 besteht auch noch die Möglichkeit, einen Ladeluftkühler 22 in der Zuführungsleitung 11 zu installieren und zwar dergestalt, daß der Ladeluftkühler 22 und der Verdampfer 13 in Reihe geschaltet sind. Der Ladeluftkühler 22 ist ebenfalls so im Fahrzeug angeordnet, daß er vom beim Fahren entstehenden Luftstrom beaufschlagt wird. Außerdem ist er stromauf der Zuführungsleitung gesehen vor dem Verdampfer 13 angeordnet.

0249718

AB 6

Patentansprüche

1. Brennkraftmaschine für ein Kraftfahrzeug mit einem eine Abgasturbine und einen Turbokompressor aufweisenden Abgasturbolader, dessen Turbokompressor über eine Zuführungsleitung verdichtete Ladeluft in Brennräume von Zylindern der Brennkraftmaschine fördert, wobei in die Zuführungsleitung eine die Ladelufttemperatur senkende Kühleinrichtung geschaltet ist, dadurch gekennzeichnet, daß die Kühleinrichtung einen Verdampfer (13) einer Klimaanlage (14) des Kraftfahrzeugs umfasst.

2. Brennkraftmaschine nach Anspruch 1, dadurch gekennzeichnet, daß die Kühleinrichtung durch einen an sich bekannten Ladeluftkühler (22) und den Verdampfer (13) gebildet wird.

3. Brennkraftmaschine nach Anspruch 2, dadurch gekennzeichnet, daß der Ladeluftkühler (22) und der Verdampfer (13) in Reihe geschaltet sind.

4. Brennkraftmaschine nach einem oder mehreren der vorhergehenden Ansprüche, dadurch gekennzeichnet, daß stromauf der Zuführungsleitung (11) gesehen der Ladeluftkühler (22) vor dem Verdampfer (13) in der Zuführungsleitung (11) angeordnet ist.